# EUROPEAN PATENT APPLICATION

(11) **EP 4 567 137 A1**
(43) Date of publication of application: **11.06.2025**
(21) Application number: 23850314.8
(22) Date of filing: 24.07.2023
(51) Int. Cl.: C21B 13/00, C21B 13/02

(54) **MOLTEN IRON MANUFACTURING EQUIPMENT AND MOLTEN IRON MANUFACTURING METHOD**

(30) Priority: 02.08.2022 KR 20220096182
(71) Applicant: POSCO Co., Ltd, Pohang-si, Gyeongsangbuk-do 37859 (KR)
(72) Inventor: YOON, Shi Kyung, Pohang-si, Gyeongsangbuk-do 37834 (KR); SHIN, Myoung Gyun, Pohang-si, Gyeongsangbuk-do 37669 (KR); KIM, Yong In, Pohang-si, Gyeongsangbuk-do 37834 (KR)
(74) Representative: Meissner Bolte Partnerschaft mbB
(86) International application number: PCT/KR2023/010633
(87) International publication number: WO 2024/029807

(57) **Abstract**

The present disclosure relates to a facility and method for manufacturing molten iron, and more particularly, to a facility and method for manufacturing reduced iron and melting the manufactured reduced iron to manufacture molten iron. A facility for manufacturing molten iron in accordance with an exemplary embodiment includes a reducing part configured to manufacture reduced iron, a melting part configured to receive and melt the reduced iron, a reforming part installed to receive an exhaust gas discharged from the melting part and by-products discharged from the reducing part and configured to generate a hydrogen-containing gas using the exhaust gas and the by-products, and an extracting part installed to receive a hydrogen-containing gas generated in the reforming part and configured to extract a hydrogen gas from the hydrogen-containing gas.

## Description

### TECHNICAL FIELD

The present disclosure relates to a facility and method for manufacturing molten iron, and more particularly, to a facility and method for manufacturing reduced iron and melting the manufactured reduced iron to manufacture molten iron.

### BACKGROUND ART

Generally, melted iron, i.e., molten iron is manufactured through a furnace process. The furnace process is carried out by processing iron ore and coal into a form that is suitable for use, inserting the processed iron ore and coal in a furnace, and blowing hot air into the furnace. Here, the hot air burns the coal, and a carbon monoxide gas generated at this time causes a reduction reaction that removes oxygen from the iron ore. In addition, heat over approximately 1,500°C generated inside the furnace causes a melting reaction that melts the iron ore or iron reduced by the carbon monoxide gas to manufacture molten iron. In such a furnace process, the reduction reaction and the melting reaction are carried out simultaneously within the furnace by the coal and the carbon monoxide gas generated from the coal. However, the furnace process has a limitation of generating a large amount of carbon dioxide, which causes environmental problems such as global warming, due to the reduction reaction between the carbon monoxide gas and the iron ore.

To solve this limitation, a hydrogen reduction iron-making process technology, which manufactures molten iron using a hydrogen gas instead of fossil fuels such as coal, is being researched and developed. The fossil fuels such as coal generate carbon dioxide when reacting with the iron ore, but since the hydrogen gas reacts with the iron ore to generate water or steam, the hydrogen reduction iron-making process may innovatively reduce carbon emission in manufacturing of the molten iron.

To manufacture the molten iron by reducing the iron ore using the hydrogen reduction iron-making process, a large amount of hydrogen gas is required. However, since the hydrogen gas is a very expensive gas, there is a limitation in that process costs increase due to the use of the large amount of hydrogen gas. In addition, when the hydrogen gas and the iron ore react, a large amount of water or steam is generated, and it is necessary to prepare a method for recycling a large amount of by-products that are generated as described above.

### (PRIOR ART DOCUMENTS)

Korean Patent Registration No. 10-1699236

### DISCLOSURE OF THE INVENTION

### TECHNICAL PROBLEM

The present disclosure provides a facility and method for manufacturing molten iron, which manufacture a hydrogen gas by recycling by-products generated during reduction of iron ore.

### TECHNICAL SOLUTION

In accordance with an exemplary embodiment, a facility for manufacturing molten iron includes: a reducing part configured to manufacture reduced iron; a melting part configured to receive and melt the reduced iron; a reforming part installed to receive an exhaust gas discharged from the melting part and by-products discharged from the reducing part and configured to generate a hydrogen-containing gas using the exhaust gas and the by-products; and an extracting part installed to receive a hydrogen-containing gas generated in the reforming part and configured to extract a hydrogen gas from the hydrogen-containing gas.

The facility may further include: a by-product supply line installed to connect the reducing part to the reforming part; and an exhaust gas supply line installed to connect the melting part to the reforming part, wherein the reducing part may include a reducing furnace connected to the by-product supply line and having a reducing space in which reduced iron is manufactured using a reducing gas, and the melting part may include an electric furnace connected to the exhaust gas supply line and having a melting space in which the reduced iron is melted using electric heat.

The reforming part may include a reactor connected to the exhaust gas supply line and the by-product supply line to receive the exhaust gas and the by-products and having a reaction space in which the exhaust gas and the by-products react with each other to generate a hydrogen-containing gas.

The reforming part may include: a purifier connected to the by-product supply line and configured to extract a reaction object from the by-products; and a reactor connected to the exhaust gas supply line and the purifier to receive the exhaust gas and the reaction object and having a reaction space in which the exhaust gas and the reaction object react with each other to produce a hydrogen-containing gas.

The purifier may include: a separator connected to the by-product supply line and configured to separate the reaction object from the by-products into a liquid state; and a heater connected to the separator, configured to heat and vaporize the reaction object in the liquid state, and connected the react so that the vaporized reaction object is supplied to the reactor.

The heater may include a heat exchanger disposed to intersect the exhaust gas supply line and configured to transfer heat of the exhaust gas to the liquid reaction object.

The facility may further include a purge gas supply line connected to the reducing furnace and configured to supply a purge gas to the reducing space, wherein the heater may be connected to the purge gas supply line to supply a vaporized reaction object to the purge gas supply line.

The extracting part may include: a first extractor connected to the reactor to extract a hydrogen gas from the hydrogen-containing gas generated from the reactor; and a second extractor connected to the separator to extract a hydrogen gas from a residual gas discharged from the separator.

The facility may further include: a raw material supply part having a storage space in which a raw material is stored and installed to supply the raw material stored in the storage space to the reducing space; and a branch line branched from the exhaust gas supply line and configured to supply a portion of the exhaust gas discharged from the electric furnace to the raw material supply part.

The branch line may be connected to the raw material supply part to directly supply the exhaust gas to the storage space or transfer heat of the exhaust gas to air supplied to the storage space.

The facility may further include a reducing gas supply line connected to the reducing furnace and configured to supply a reducing gas to the reducing space, wherein the extracting part may be connected to the reducing gas supply line to supply a hydrogen gas to the reducing gas supply line.

In accordance with another exemplary embodiment, a method for manufacturing molten iron includes: manufacturing reduced iron; collecting by-products generated in the manufacturing of the reduced iron; melting the reduced iron to manufacture a molten product; collecting an exhaust gas discharged during the manufacturing of the molten product; producing a hydrogen-containing gas using the collected by-products and the exhaust gas; and extracting a hydrogen gas from the hydrogen-containing gas.

The manufacturing of the reduced iron may include: preheating a raw material using the exhaust gas; and allowing the preheated raw material to react with the reducing gas to reduce the raw material.

The preheating of the raw material may include injecting the exhaust gas into the raw material or receiving heat of the exhaust gas to inject heated air into the raw material.

The raw material may include powdered iron ore having a particle size of more than approximately 0 mm and less than or equal to approximately 8 mm.

The producing of the hydrogen-containing gas may include allowing the collected by-products to directly react with the exhaust gases.

The producing of the hydrogen-containing gas may include: extracting a reaction object from the collected by-products; and allowing the extracted reaction object to react with the exhaust gas.

The extracting of the reaction object may include: injecting a processing liquid into the collected by-products to separate the reaction object into a liquid state; and heating and vaporizing the reaction object in the liquid state.

The vaporizing may include heating the liquid reaction object with heat of the exhaust gas.

The manufacturing of the molten iron may include supplying a purge gas to a reducing space, in which the reduced iron is manufactured, wherein the supplying of the purge gas may include utilizing a portion of the vaporized reaction object as a purge gas supplied to the reducing space.

The method may further include: collecting a residual gas discharged during the separating of the reaction object into the liquid state; and extracting a hydrogen gas from the residual gas.

The method may further include supplying the extracted hydrogen gas during the manufacturing of the reduced iron.

The reaction object may include steam, and the exhaust gas may include a carbon monoxide gas.

### ADVANTAGEOUS EFFECTS

In accordance with the exemplary embodiment, the hydrogen gas may be produced by reacting the by-products discharged during the manufacturing of the reduced iron with the exhaust gas discharged when the reduced iron is melted, thereby effectively recycling the by-products generated during the process.

In addition, the produced hydrogen gas may be recycled as the reducing gas for reducing the raw materials, the amount of hydrogen gas to be used may be reduced, and the resources and costs required for the process may be minimized.

In addition, the energy may be efficiently collected by using the sensible heat of the high-temperature exhaust gas to preheat the raw materials and produce the hydrogen gas.

### BRIEF DESCRIPTION OF THE DRAWINGS

FIG. 1 is a schematic view of a facility for manufacturing molten iron in accordance with an exemplary embodiment;
FIG. 2 is a view illustrating an example of a reducing furnace for manufacturing reduced iron and an electric furnace for melting the manufactured reduced iron;
FIG. 3 is a view illustrating a state in which a raw material is preheated using an exhaust gas in a raw material supply part;
FIG. 4 is a schematic view of a facility for manufacturing molten iron in accordance with an exemplary embodiment;
FIG. 5 is a view illustrating a state in which a separator separates a reaction object from by-products into a liquid state; and
FIG. 6 is a schematic view of a method for manufacturing molten iron in accordance with an exemplary embodiment.

### MODE FOR CARRYING OUT THE INVENTION

Hereinafter, exemplary embodiments of the present invention will be described in detail with reference to the accompanying drawings. The present invention may, however, be embodied in different forms and should not be construed as limited to the embodiments set forth herein. Rather, these embodiments are provided so that the present invention will be thorough and complete, and will fully convey the scope of the present invention to those skilled in the art. In order to explain the present disclosure in detail, the drawings may be exaggerated, and the same symbols in the drawings refer to the same elements.

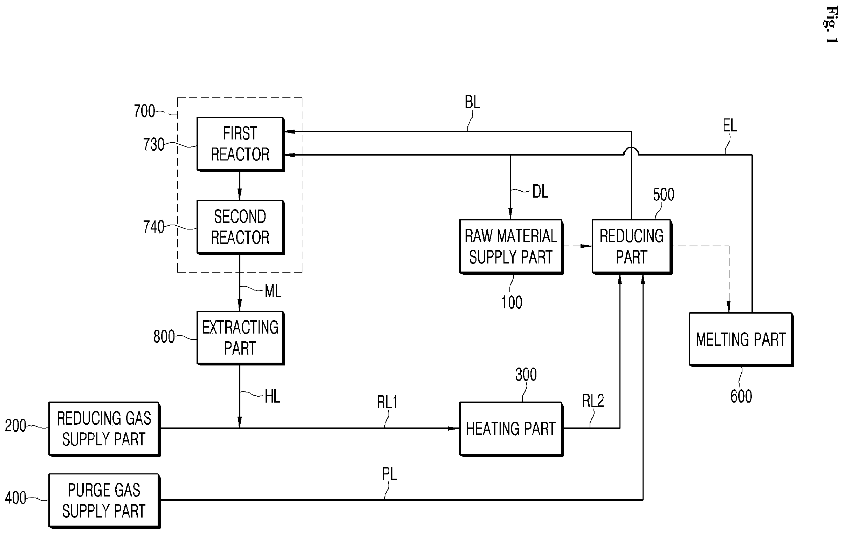

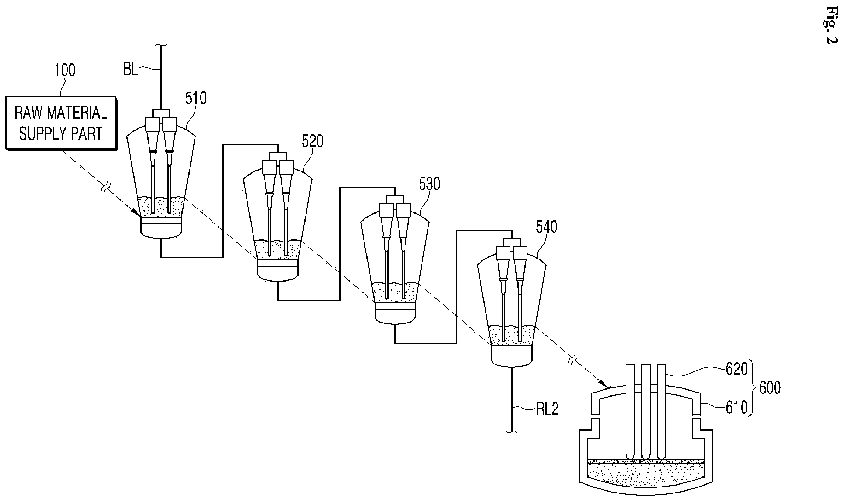

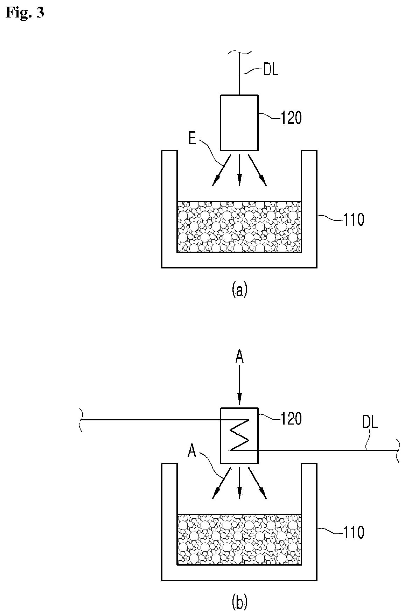

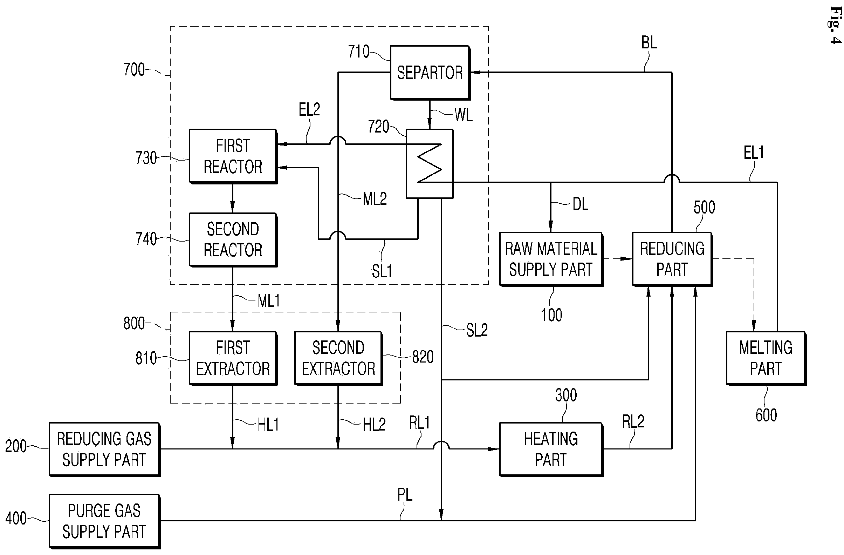

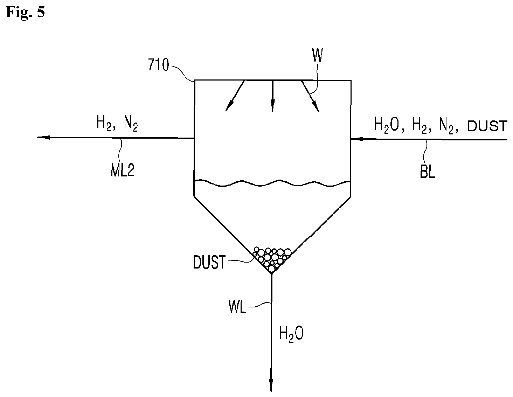

FIG. 1 is a schematic view of a facility for manufacturing molten iron in accordance with an exemplary embodiment, FIG. 2 is a view illustrating an example of a reducing furnace for manufacturing reduced iron and an electric furnace for melting the manufactured reduced iron, and FIG. 3 is a view illustrating a state in which a raw material is preheated using an exhaust gas in a raw material supply part. In addition, FIG. 4 is a schematic view of a facility for manufacturing molten iron in accordance with an exemplary embodiment, and FIG. 5 is a view illustrating a state in which a separator separates a reaction object from by-products into a liquid state. In the drawings, an arrow indicated by dotted lines indicates a flow of raw materials and reduced iron, and an arrow indicated by solid lines indicates a flows of by-products and gases.

Referring to FIGS. 1 to 5, a facility for manufacturing molten iron in accordance with an exemplary embodiment may include a reducing part 500 capable of manufacturing reduced iron, a melting part 600 capable of receiving and melting the reduced iron, a reforming part 700 installed to receive an exhaust gas discharged from the melting part 600 and by-products discharged from the reducing part 500 and capable of generating a hydrogen-containing gas using the exhaust gas and the by-products, and an extracting part 800 installed to receive a hydrogen-containing gas generated in the reforming part 700 and capable of extracting a hydrogen gas from the hydrogen-containing gas. In addition, the facility for manufacturing the molten iron in accordance with an exemplary embodiment may further include a raw material supply part installed to supply a raw material to the reducing part 500 and a reducing gas supply part installed to supply a reducing gas to the reducing part 500.

The raw material supply part 100 may be installed to supply the raw material to the reducing part 500. Here, the raw material may include iron ore, and the iron ore may include reduced fine iron ore, that is, powdered iron ore which has a particle size greater than approximately 0 mm and less than or equal to approximately 8 mm. The raw material supply part 100 may include a reservoir 110 having a storage space in which the raw material is stored. The raw material may be stored in the storage space of the reservoir 110 for a long time or may be temporarily stored before supplying the raw material to the reducing part 500. The reservoir 110 may include, for example, a hopper.

The raw material may be preheated in the storage space of the reservoir 110, and the raw material preheated in the storage space may be supplied to the reducing part 500. Here, the reservoir 110 may receive a portion of the exhaust gas discharged from the melting part 600 to preheat the raw material. For this, the facility for manufacturing the molten iron in accordance with an exemplary embodiment may further include a branch line DL branched from an exhaust gas supply line EL to supply a portion of the exhaust gas discharged from the melting part 600 to the reservoir 110. The preheating of the raw material using the exhaust gas supplied through the branch line DL will be described later with reference to FIG. 3.

A reducing gas supply part 200 may be installed to store the reducing gas and supply the reducing gas to the reducing part 500. Here, the reducing gas may include a hydrogen gas, and the hydrogen gas may be contained at a ratio of approximately 80% to approximately 100% of the total reducing gas. The hydrogen gas stored in the reducing gas supply part 200 may be produced by electrolyzing water, but is not limited thereto, and may be produced by various methods such as decomposing an ammonia gas or producing the hydrogen gas by chemically reacting a natural gas. For example, the ammonia gas may be decomposed into a hydrogen gas and a nitrogen gas at a high temperature, the decomposed hydrogen gas may be used as the reducing gas, and the nitrogen gas may be used as a purge gas, which will be described later.

The reducing gas supply part 200 may supply the reducing gas to the reducing part 500 through reducing gas supply lines RL1 and RL2 that connect the reducing gas supply part 200 to the reducing part 500. Here, an amount of reducing gas supplied by the reducing gas supply part 200 to the reducing part 500 may be more than twice an amount required to entirely reduce the raw material supplied to the reducing part 500. To improve reaction efficiency between the raw material and the reducing gas, the amount of reducing gas may be controlled, for example, to a range of two to three times the amount required to entirely reduce the raw material supplied to the reducing part 500.

A heating part 300 may be installed in each of the reducing gas supply lines RL1 and RL2 to heat the reducing gas supplied from the reducing gas supply part 200 to the reducing part 500. In the reducing part 500, the raw material containing the iron ore and the reducing gas containing the hydrogen gas may react to reduce the iron ore. Since the reaction between the iron ore and the hydrogen gas is a strong endothermic reaction, the reaction efficiency may be improved when the hydrogen gas supplied to the reducing part 500 is heated and supplied to a temperature of approximately 800°C or more, more preferably approximately 850°C or more. As a result, the heating part 300 may be connected to the reducing gas supply part 200 through the first reducing gas supply line RL1 and also be connected to the reducing part 500 through the second reducing gas supply line RL2 to heat the low-temperature hydrogen gas supplied through the first reducing gas supply line RL1 to a temperature of approximately 800°C to approximately 1,200°C, thereby supplying the hydrogen gas to the reducing part 500 through the second reducing gas supply line RL2. Since the heating part 300 may have various structures for heating the reducing gas in a direct or indirect heating manner, a detailed description thereof will be omitted.

The facility for manufacturing the molten iron in accordance with an exemplary embodiment may further include a purge gas supply part 400 installed to store a purge gas and supply the purge gas to the reducing part 500. The reducing part 500 may have a reducing space capable of producing the reduced iron, and the reducing space may need to be purged for maintenance between processes. In addition, there are cases in which the purge gas needs to be supplied during the process. For example, when using the powdered iron ore as the raw material, the purge gas may be supplied to increase in fluidity of the powdered iron ore, thereby preventing the iron ore from sticking in the reducing space. Thus, the purge gas supply part 400 may supply the purge gas to the reducing space through a purge gas supply line PL that connects the purge gas supply part 400 to the reducing part 500, and an inert gas such as nitrogen may be used as the purge gas.

The reducing part 500 may produce the reduced iron by reducing the raw material. That is, the reducing part 500 may receive the iron ore as the raw material from the raw material supply part 100, receive the reducing gas from the reducing gas supply part 200, and react the iron ore with the reducing gas to manufacture the reduced iron. The reducing part 500 may include a reducing furnace having a reducing space capable of manufacturing the reduced iron using the reducing gas. The reducing furnace may include fluid reducing furnaces 510, 520, 530, and 540 that manufacture the reduced iron while allowing the raw material to flow, and the fluid reducing furnaces 510, 520, 530, and 540 may be provided as a single unit. However, to effectively reduce low-grade iron ore or powdered iron ore having a low iron content, as illustrated in FIG. 2, the plurality of fluid reducing furnaces 510, 520, 530, and 540 may be connected to sequentially move the raw material, thereby manufacturing the reduced iron. Here, there is no limit to the number of fluid reducing furnaces 510, 520, 530, and 540, but in order to sufficiently reduce the raw material, and as illustrated in FIG. 2, the reducing part 500 may include four reducing furnaces including a first fluid reducing furnace 510, a second fluid reducing furnace 520, a third fluid reducing furnace 530, and a fourth fluid reducing furnace 540. Here, the raw material supply part 100 may supply the raw material to the first fluid reducing furnace 510, and the reducing gas supply part 200 may supply the reducing gas to the fourth fluid reducing furnace 540. The raw material supplied to the first fluid reducing furnace 510 may be reduced by sequentially moving through the second fluid reducing furnace 520, the third fluid reducing furnace 530, and the fourth fluid reducing furnace 540 and thus be manufactured into the reduced iron.

The reduced iron manufactured in the reducing part 500 may be supplied to the melting part 600. As illustrated in FIG. 2, the reduced iron manufactured through the first fluid reducing furnace 510, the second fluid reducing furnace 520, the third fluid reducing furnace 530, and the fourth fluid reducing furnace 540 may be discharged from the fluid reducing furnace 540 and supplied to the melting part 600. Here, as described above, the preheated raw material and the reducing gas having a temperature of approximately 800°C or more may be supplied to the reducing space to manufacture the reduced iron. Thus, the reduced iron manufactured in the reducing part 500 may be discharged at a high temperature of, for example, approximately 600°C to approximately 800°C, even in consideration of a heat loss. As described above, the reduced iron discharged at the high temperature may be directly supplied to the melting part 600 without passing through a separate cooling device. That is, the reduced iron or reduced fine iron manufactured by reducing the iron ore with a particle size exceeding approximately 8 mm or powdered iron ore with a particle size exceeding approximately 0 mm and approximately 8 mm or less may be supplied to the melting part 600 as it is. However, unlike this, the reduced iron or reduced fine iron may be compacted in a hot state in a separate molding device and then supplied to the melting part 600.

In the reducing part 500, a large amount of by-products may be discharged in addition to the reduced iron. The by-products discharged from the reducing part 500 may include steam. As described above, in the reducing part 500, the iron ore and the hydrogen gas may react to manufacture the reduced iron. Here, an oxygen component of the iron ore and a hydrogen component of the hydrogen gas may react to generate a large amount of steam in the reducing space, and the generated steam may be discharged from the reducing part 500 as a by-product. In addition, the by-products discharged from the reducing part 500 may include the hydrogen gas and the nitrogen gas. As described above, the reducing gas may be supplied in a range of two to three times the amount required to entirely reduce the raw material supplied to the reducing part 500, and thus, the remaining hydrogen gas that does not react with the raw material may be discharged from the reducing part 500 as the by-product. In addition, as described above, the purge gas, for example, the nitrogen gas may be supplied to the reducing part 500 for various reasons. As described above, the nitrogen gas supplied for purge may be discharged from the reducing part 500 as the by-product. In addition, dust, etc., generated in the reducing part 500 may be contained in the by-products and then discharged, and the by-products may move along a flow of the reducing gas within the reducing part 500 and then be discharged from the first fluid reducing furnace 510. Then, the discharged by-products may be supplied to the reforming part 700 through the by-product supply line BL connected to the reducing part 500.

The melting part 600 may receive the reduced iron to melt the reduced iron in various manners. For example, the melting part 600 may receive the fine or compacted reduced iron from the reducing part 500 to heat and melt the reduced iron. In addition, the melting part 600 may receive additional iron scrap in addition to the reduced iron and melt the reduced iron and the iron scrap together. The melting part 600 may include electric furnaces 610 and 620 having a melting space capable of melting the reduced iron using electric heat. The above-described electric furnaces 610 and 620 may include an electric furnace main body 610 having a melting space and an electrode rod 620 of which at least a portion is partially disposed in the melting space to generate the electric heat. When the reduced iron is charged into the melting space, the electric furnaces 610 and 620 may apply power to the electrode rod 620 to melt the reduced iron.

However, the reduced iron may have a high melting point of approximately 1,500°C or more, making it difficult to melt the reduced iron. Thus, in the melting part 600, a recarburizing agent containing a carbon component may be added to change at least a portion of iron particles of the reduced iron into a phase of a cementite (Fe3C), which has a melting point of approximately 1,200°C or less. In addition, at least partially unreduced raw materials, that is, partially reduced iron or iron ore may be supplied to the melting part 600 from the reducing part 500. As described above, at least a portion of the unreduced raw material may have an oxygen component, and the oxygen component may react with the carbon component of the recarburizing agent within the melting space. Thus, in the melting part 600, the exhaust gas containing the carbon monoxide gas, that is, the exhaust gas having a high carbon monoxide concentration (CO-rich) may be discharged while melting the reduced iron. As described above, the exhaust gas discharged from the melting part 600 may be discharged at a high temperature of approximately 1,200°C or more.

The facility for manufacturing the molten iron in accordance with an exemplary embodiment may produce the hydrogen gas by utilizing the high-temperature exhaust gas containing the by-products discharged from the reducing part 500 and the carbon monoxide gas discharged from the melting part 600. The hydrogen gas may be produced by the reforming part 700 generating the hydrogen-containing gas using the exhaust gas and the by-products, and the extracting part 800 extracting the hydrogen gas from the generated hydrogen-containing gas. For this, the facility for manufacturing the molten iron in accordance with an exemplary embodiment may further includes a by-product supply line BL installed to connect the reducing part 500 to the reforming part 700 and an exhaust gas supply line EL installed to connect the melting part 600 to the reforming part 700.

As illustrated in FIG. 1, the facility for manufacturing the molten iron in accordance with an exemplary embodiment may produce the hydrogen gas by allowing the by-products discharged from the reducing part 500 to directly react with the exhaust gas discharged from the melting part 600. That is, in an exemplary embodiment, the hydrogen gas may be produced by allowing the by-products to react with the exhaust gas without separating a specific material from the by-products discharged from the reducing part 500. For this, the reforming part 700 may include reactors 730 and 740 that are connected to the exhaust gas supply line EL to receive the exhaust gas and connected to the by-product supply line BL to receive the by-products, and have a reaction space in which the exhaust gas and the by-products react with each other to generate the hydrogen-containing gas. In addition, the extracting part 800 may be connected to the reforming part 700 to receive the hydrogen-containing gas generated in the reforming part 700, thereby extracting the hydrogen gas from the hydrogen-containing gas.

As described above, the by-products discharged from the reducing part 500 may include steam, a hydrogen gas, a nitrogen gas, and dust. Here, the dust may be removed before the by-products are supplied to the reforming part 700 or within the reforming part 700. In addition, the exhaust gas discharged from the melting part 600 may contain a large amount of carbon monoxide gas. The reforming part 700 may allow the by-products containing the steam, the hydrogen gas, and the nitrogen gas to react with the exhaust gas containing carbon monoxide gas. Here, the steam contained in the by-products and the carbon monoxide gas contained in the exhaust gas may be reformed into a hydrogen gas and a carbon dioxide gas by a water-gas shift reaction (WGSR) in accordance with a following reaction formula under a catalyst such as chromium oxide (Cr₂O₃), aluminum oxide (Al₂O₃) or copper oxide (CuO).

[Reaction Formula] *H*₂*O + CO* → *CO*₂ + *H*₂

As the steam and carbon monoxide gas react with each other and are reformed into the carbon dioxide and the hydrogen gas, a hydrogen-containing gas, that is, the gas containing hydrogen gas, the nitrogen gas, and the carbon dioxide gas may be generated in the reforming part 700.

Here, the reforming part 700 may include reactors 730 and 740 each of which has a reaction space, in which the hydrogen-containing gas is generated by allowing the exhaust gas to react with the by-products. Here, the reactors 730 and 740 may be installed singly, but the plurality of reactors 730 and 740 may be installed to be connected in series as illustrated in FIG. 1. That is, the reforming part 700 may include a first reactor 730 connected to the exhaust gas supply line EL and the by-product supply line BL to allow the exhaust gas to primarily react with the by-products and a second reactor 740 that receives the hydrogen-containing gas, the residual exhaust gas, and the residual by-products from the first reactor 730 to allow the residual exhaust gas to secondarily react with the residual by-products. The water-gas shift reaction may have a fast conversion rate at a high temperature, but has a low equilibrium conversion rate, and also may have a slow conversion rate, but a high equilibrium conversion rate at a low temperature. Thus, the reforming part 700 may allow the exhaust gas and the by-products to first rapidly react with each other through the first reactor 730 under a relatively high temperature atmosphere, and then, allow the exhaust gas and the by-products to stably react with each other through the second reactor 740 under a relatively low temperature atmosphere. In the drawings, a configuration in which the two reactors including the first reactor 730 and the second reactor 740 are connected in series is illustrated. However, the reactor may be provided as three or more reactors including a high-temperature reactor that performs the reaction under a high-temperature atmosphere, a medium-temperature reactor that performs the reaction under a medium-temperature atmosphere, and a low-temperature reactor that performs the reaction under a low-temperature atmosphere. When provided as the three reactors, the high-temperature reactor may carry out the reaction under a high-temperature atmosphere of approximately 350°C to approximately 550°C, the medium-temperature reactor may carry out the reaction under a medium-temperature atmosphere of approximately 250°C to approximately 350°C, and the low-temperature reactor may carry out the reaction under a low-temperature atmosphere of approximately 200°C to approximately 250°C.

The reforming part 700 may be connected to the extracting part 800 through the hydrogen-containing gas supply line ML, and the extracting part 800 may receive the hydrogen-containing gas generated in the reforming part 700 to extract the hydrogen gas from the hydrogen-containing gas. For example, the extracting part 800 may be connected to the second reactor 740 through the hydrogen-containing gas supply line ML to receive the hydrogen-containing gas from the second reactor 740, thereby extracting the hydrogen gas. This extracting part 800 may extract the hydrogen gas from the hydrogen-containing gas using a pressure swing absorption (PSA) method. That is, in the pressure swing adsorption method, a gas may be extracted using adsorption selectivity of each component with respect to an adsorbent, and the extracting part 800 may use a carbon molecular sieve as the adsorbent that is capable of adsorbing hydrogen components to extract the hydrogen gas from the hydrogen-containing gas including various gases other than the hydrogen gas. Here, the hydrogen component adsorbed on the adsorbent may be desorbed and extracted as the hydrogen gas, and the extracting part 800 may extract the hydrogen gas from the hydrogen-containing gas by repeatedly performing adsorption and desorption of the hydrogen component.

The hydrogen gas extracted from the extracting part 800 may be used for various purposes. For example, the reducing part 500 may reduce the raw material, that is, the iron ore using the extracted hydrogen gas. The hydrogen gas may be used in a large amount more than twice the amount required to entirely reduce the raw material supplied to the reducing part 500, but is a very expensive gas, and thus, to reduce costs through resource recycling, the hydrogen gas extracted from the extracting part 800 may be reused as the reducing gas to reduce the iron ore. For this, the hydrogen gas supply line HL may be connected to the extracting part 800, and the hydrogen gas supply line HL may be connected to the first reducing gas supply line RL1, and thus, the extracting part 800 may supply the hydrogen gas to the first reducing gas supply line RL1, and the extracted hydrogen gas may be supplied to the reducing part 500 along the hydrogen gas supply line HL, the first reducing gas supply line RL1, and the second reducing gas and then be used when reducing the iron ore.

As described above, the exhaust gas discharged from the melting part 600 may react with the by-products discharged from the reducing part 500 to produce the hydrogen gas. However, as described above, the exhaust gas discharged from the melting part 600 may be discharged at a high temperature of approximately 1,200°C or more. Thus, in an exemplary embodiment, the raw material may be preheated by utilizing thermal energy of the exhaust gas.

As illustrated in FIG. 3, the raw material supply part 100 may include a reservoir 110, and the reservoir 110 may have a storage space for storing the raw material. The raw material may be preheated in the storage space of the reservoir 110, and the raw material preheated in the storage space may be supplied to the reducing part 500. For this, the raw material supply part 100 may further include a preheating gas supply part 120 installed to supply a preheating gas to the storage space of the reservoir 110. Here, as illustrated in (a) of FIG. 3, the preheating gas supply part 120 may be connected to the branch line DL to directly supply the high-temperature exhaust gas E having a temperature of approximately 1,200°C or more to the storage space, thereby performing the preheating. In addition, as illustrated in (b) of FIG. 3, the preheating gas supply part 120 may heat external air A supplied to the storage space with the heat of the exhaust gas having a temperature of approximately 1,200°C or more to supply the heated air to the storage space, thereby preheating the raw material. For this, the preheating gas supply part 120 may be disposed to intersect the branch line DL, and thus, the sensible heat of the exhaust gas passing through the branch line DL may be transferred to the external air A.

Hereinafter, a facility for manufacturing molten iron in accordance with another exemplary embodiment will be described with reference to FIG. 4. While the facility for manufacturing the molten iron in accordance with an exemplary embodiment may produce the hydrogen gas by allowing the by-products discharged from the reducing part 500 to directly react with the exhaust gas discharged from the melting part 600, the facility for manufacturing the molten iron in accordance with another exemplary embodiment may separate a reaction object from by-products discharged from a reducing part 500 to react with an exhaust gas, thereby producing a hydrogen gas. Thus, the facility for manufacturing the molten iron in accordance with another exemplary embodiment will be described based on these differences, and description of portions that are capable of being applied in the same manner as the facility for manufacturing the molten iron described above will be omitted.

The reforming part 700 in accordance with another exemplary embodiment may include purifiers 710 and 720 connected to a by-product supply line BL to extract a reaction object from the by-products supplied through the by-product supply line BL and reactors 730 and 740 which are connected to the exhaust gas supply lines EL1 and EL2 and the purifiers 710 and 720 to receive the exhaust gas and the reaction object, respectively, and each of which has a reaction space in which a hydrogen-containing gas is generated by allowing the exhaust gas and the reaction object to react with each other.

Here, the purifiers 710 and 720 may include a separator 710 connected to the by-product supply line BL to separate the reaction object into a liquid state from the by-products supplied through the by-product supply line BL and a heater 720 connected to the separator 710 to heat and vaporize the liquid reaction object supplied from the separator 710. Here, the heater 720 may be disposed to intersect the exhaust gas supply lines EL1 and EL2, that is, disposed on the exhaust gas supply lines EL1 and EL2. For example, the heater 720 may be connected to the melting part 600 through the first exhaust gas supply line EL1, and the reaction object vaporized in the heater 720 may be supplied to the reactors 730 and 740 through the second exhaust gas supply line EL2.

As described above, the by-products discharged from the reducing part 500 may include steam, a hydrogen gas, a nitrogen gas, and dust. Here, the separator 710 may collect dust by injecting water to the by-products, as illustrated in FIG. 5. The collected dust may be removed by being discharged to the outside of the separator 710 through an outlet (not shown) of the separator 710. Here, the steam in the by-products may be condensed by the injected water and mixed with the injected water and then be separated from the by-products into a liquid state, that is, water. The separated water may be supplied to the heater 720 along the water supply line WL connecting the separator 710 to the heater 720. The residual gas including the hydrogen gas and the nitrogen gas, which excludes steam and dust, may be discharged from the separator 710, and the residual gas may move along the residual gas supply line ML2 and then supplied to the second extractor 820, which will be described later.

The heater 720 may receive the liquid reaction object, that is, water, from the separator 710 through the water supply line WL and then heat the supplied water to vaporize the water into steam. The heater 720 may have various structures to heat the water and vaporize the water into the steam. However, as described above, the exhaust gas discharged from the melting part 600 may be discharged at a high temperature of approximately 1,200°C or more. Thus, in an exemplary embodiment, a heat exchanger may be used as the heater 720 to vaporize the water into the steam by utilizing heat energy of the exhaust gas. The heat exchanger may be connected to the first exhaust gas supply line EL1 to receive the exhaust gas, and the heat of the exhaust gas having a temperature of approximately 1,200°C or more may be transferred to the water supplied from the separator 710 through the water supply line WL to vaporize the water into the steam. As described above, all or a portion of the steam produced from the heat exchanger may be transferred to the reactor along the first steam supply line SL1.

When a portion of the steam produced from the heater 720 is transferred to the reactors 730 and 740 along the first steam supply line SL1, the other portion of the steam produced from the heater 720 may be transferred to the reducing part 500 as a purge gas along the second steam supply line SL2. That is, the steam may have low reactivity with the iron ore and the reducing gas as a reaction product produced by the reaction between the iron ore that is the raw material and the hydrogen gas in the reducing gas and thus may be supplied to the reducing part 500 as the purge gas. As described above, when the steam is supplied to the reducing part 500 as the purge gas, the heat of the steam may be utilized for the reduction reaction to save energy required for the reduction reaction. To supply the steam as the purge gas to the reducing part 500, the second steam supply line SL2 may be connected to the purge gas supply line PL. In contrast, the second steam supply line SL2 may be directly connected to the reducing part 500 and thus be supplied to the reducing part 500 so that the steam and the purge gas have different paths.

In the reactors 730 and 740, the exhaust gas supplied through the second exhaust gas supply line EL2 via the heater 720 and the vaporized reaction object, that is, the steam supplied from the heater 720 through the first water vapor supply line SL1 may react with each other within the reaction space to generate the hydrogen-containing gas. As described above, when the steam is extracted and supplied to the reactor to react with the exhaust gas, reaction efficiency may be further improved. That is, the reactor may reform a carbon monoxide gas contained in the steam and the exhaust gas into a hydrogen gas and a carbon dioxide gas under a catalyst through the water-gas conversion reaction described above. When the steam is extracted and supplied to the reactor, a reaction rate may be further improved due to a high concentration of the steam compared to a case of allowing the by-products containing various gases other than the steam to directly react with the carbon monoxide component contained in the exhaust gas. The reactor may include a first reactor 730 connected to the second exhaust gas supply line EL2 and the heater 720 to allow the exhaust gas and water vapor to primarily react with each other and a second reactor 740 connected to the first reactor 730 to receive the residual exhaust gas and the residual water vapor from the first reactor 730, thereby performing a secondary reaction. Alternatively, the reactor may include three or more components including a high-temperature reactor that carries out the reaction under a high-temperature atmosphere, a medium-temperature reactor that carries out the reaction under a medium-temperature atmosphere, and a low-temperature reactor that carries out the reaction under a low-temperature atmosphere, as described above, and thus, duplicated descriptions will be omitted.

The extracting part 800 may be connected to the reactor to extract the hydrogen gas by receiving the hydrogen-containing gas including the hydrogen gas and the carbon dioxide gas generated from the reactor. As described above, the extracting part 800 may adsorb the hydrogen component and desorb the adsorbed hydrogen component to extract the hydrogen gas. Alternatively, the extracting part 800 may adsorb the carbon dioxide component and collect the hydrogen gas discharged without being adsorbed to extract the hydrogen gas.

Here, the extracting part 800 may include a first extractor 810 and a second extractor 820. Here, the first extractor 810 may be connected to the reactors 730 and 740 through a hydrogen-containing gas supply line ML1 to extract the hydrogen gas from the hydrogen-containing gas supplied through the reactors 730 and 740. The second extractor 820 may be connected to the separator 710 through a residual gas supply line ML2 to extract the hydrogen gas from the residual gas discharged from the separator 710. The separator 710 may collect dust in the by-products and separates the steam in the by-products, and the residual gas containing the hydrogen gas and the nitrogen gas excluding the steam and dust may be discharged from the separator 710. Here, the second extractor 820 may extract the hydrogen gas contained in the residual gas. For this, the second extractor 820 may adsorb the hydrogen component from the residual gas containing the hydrogen gas and the nitrogen gas and extract the hydrogen gas by desorbing the adsorbed hydrogen component. Here, the first extractor 810 and the second extractor 820 may be connected to a first reducing gas supply line RL1 by a first hydrogen gas supply line HL1 and a second hydrogen gas supply line HL2, respectively, to supply the hydrogen gas to the reducing gas supply line RL, and the hydrogen gas extracted by the first extractor 810 and the second extractor 820 may be supplied to the reducing part 500 along the first reducing gas supply line RL1 and the second reducing gas RL2 and thus be used for reducing the iron ore.

The facility for manufacturing the molten iron in accordance with an exemplary embodiment may produce the hydrogen gas by moving the by-products and the gases along each of the above-described tubes. The movement of the by-products and the gases may be controlled through valves (not shown) installed in the tubes, and the valves may be installed at various positions to control a flow amount and flow rate of the by-products and the gases, which move along the respective tubes.

Hereinafter, a method for manufacturing molten iron in accordance with an embodiment will be described. The method for manufacturing the molten iron in accordance with an exemplary embodiment may be a method for manufacturing molten iron using the above-described facility for manufacturing the molten iron, and thus, since the above-described contents in relation to the facility for manufacturing the molten iron are applied as there are, description of duplicated contents will be omitted.

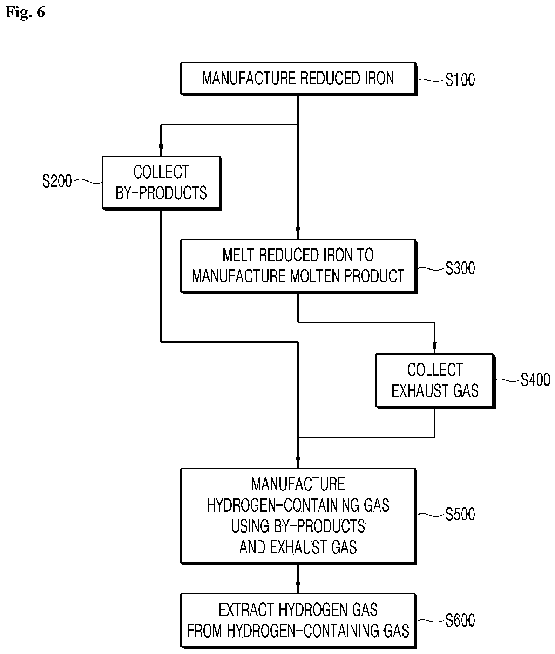

FIG. 6 is a schematic view of a method for manufacturing molten iron in accordance with an exemplary embodiment.

Referring to FIG. 6, a method for manufacturing molten iron in accordance with an exemplary embodiment may include a process (S100) of manufacturing reduced iron, a process (S200) of collecting by-products generated in the process of manufacturing the reduced iron, a process (S300) of melting the reduced iron to manufacture a molten product, a process (S400) of collecting an exhaust gas discharged during the process of manufacturing the molten product, a process (S500) of producing a hydrogen-containing gas using the collected by-products and the exhaust gas, and a process of extracting a hydrogen gas from the hydrogen-containing gas. Here, the process (S100) of manufacturing the reduced iron and the process (S200) of collecting the by-products generated in the process of manufacturing the reduced iron may be performed at the same time, and the process (S300) of melting the reduced iron to manufacture the molten product and the (S400) of collecting the exhaust gas discharged during the process of manufacturing the molten product may also be performed at the same time. In addition, since each process are continuously performed to manufacture the molten iron, it may not correspond to a time-series relationship in which another process is performed after one process is completed.

The process (S100) of manufacturing the reduced iron may be performed by supplying a raw material and the reducing gas to a reducing part 500. That is, the process (S100) of manufacturing the reduced iron may include a process of supplying the raw material to the reducing part 500, a process of supplying a reducing gas to the reducing part 500, and a process of reducing the raw material by allowing the raw material to react with the reducing gas.

The process of supplying the raw material may be performed by a raw material supply part 100, which is installed to supply the raw material to the reducing part 500 so as to supply the raw materials to the reducing part 500. Here, the raw material may include iron ore, and the iron ore may include reduced fine iron ore, that is, powdered iron ore which has a particle size greater than approximately 0 mm and less than or equal to approximately 8 mm. The process of supplying the raw material may include a process of preheating the raw material. In an exemplary embodiment, energy required for the reduction may be minimized by supplying and reducing the preheated raw materials, that is, the iron ore.

The process of supplying the reducing gas may be performed by a reducing gas supply part 200 supplying the reducing gas to the reducing part 500. Here, the reducing gas may include a hydrogen gas, and the hydrogen gas may be contained at a ratio of approximately 80% to approximately 100% of the total reducing gas. The process of supplying the reducing gas may be performed by allowing the reducing gas supply part 200 to supply the reducing gas to the reducing part 500 through reducing gas supply lines RL1 and RL2 that connect the reducing gas supply part 200 to the reducing part 500. Here, in the process of supplying the reducing gas, an amount of reducing gas supplied to the reducing part 500 may be controlled to be in a range of more than 2 times and less than 3 times an amount required to entirely reduce the raw material supplied to the reducing part 500.

In the process of supplying the reducing gas, the reducing gas may be heated to a temperature of approximately 800°C to approximately 1,200°C and then supplied to the reducing part 500. When the hydrogen gas is used as the reducing gas, the reduced iron may be manufactured by allowing the iron ore and the hydrogen gas supplied to the reducing part 500 to react with each other. Since the reaction between the iron ore and the hydrogen gas is a strong endothermic reaction, the iron ore supplied to the reducing part 500 may be heated at a temperature of approximately 800°C or more, more preferably approximately 850°C or more, and when the heated reducing gas is supplied, reduction efficiency may be improved.

In addition, the process (S100) of manufacturing the reduced iron may further include a process of supplying a purge gas to the reducing part 500. Here, the process of supplying the purge gas may be performed by a purge gas supply part 400, which is installed to supply the purge gas to the reducing part 500, so as to supply the purge gas to a reducing space through the purge gas supply line PL. Here, an inert gas such as nitrogen may be used as the purge gas.

In the process of reducing the raw material by allowing the raw material to react with the reducing gas, the reducing part 500 may receive the raw material from the raw material supply part 100, receive the reducing gas from the reducing gas supply part 200, and react the iron ore with the reducing gas to reduce the iron ore. The reducing part 500 may include a reducing furnace having a reducing space capable of manufacturing the reduced iron using the reducing gas. The reducing furnace may be provided as a single unit, but to effectively reduce low-grade iron ore or powdered iron ore having a low iron content, the plurality of reducing furnaces may be connected to sequentially move the raw material, thereby manufacturing the reduced iron, as described above.

In the process of reducing the raw material by allowing the raw material to react with the reducing gas, a large amount of by-products may be generated in addition to the reduced iron. The by-products generated and discharged from the reducing part 500 may include steam generated by the reaction of the iron ore and the hydrogen gas and also may include the hydrogen gas that does not react with the raw material and the nitrogen gas supplied as the purge gas. In addition, dust generated in the reducing part 500 may be contained in the by-products and discharged, and the by-products may move along a flow of the reducing gas within the reducing part 500 and be discharged from the reducing furnace. As described above, the by-products discharged from the reducing furnace may be collected in the process (S200) of collecting the by-products, and the collected by-products may be used in the process (S500) of producing a hydrogen-containing gas, which will be described later.

The process (S300) of manufacturing the molten product may be performed by the melting part 600 receiving the reduced iron from the reducing part 500 to melt the supplied reduced iron. That is, the melting part 600 may receive the fine or compacted reduced iron from the reducing part 500 to heat and melt the reduced iron. In addition, the process (S300) of manufacturing the molten product may be performed by the melting part 600 receiving the reduced iron from the reducing part 500 to melt the supplied reduced iron using electric heat. Here, the melting part 600 may include an electric furnace having a melting space capable of melting the reduced iron using electric heat. Such an electric furnace may include an electric furnace main body having a melting space and an electrode rod of which at least a portion is disposed in the melting space to generate electric heat, and the melting part 600 may provide electric power to the electrode rod when the reduced iron is charged into the melting space, thereby melting the reduced iron.

Here, the process (S300) of manufacturing the molten product may include the process of putting a recarburizing agent into the melting part 600, that is, the melting space of the electric furnace. Pure reduced iron may have a high melting point of approximately 1,500°C or more, making it difficult to melt the reduced iron. Accordingly, in the process of manufacturing the melt (S300), a recarburizing agent containing a carbon component may be added to change at least a portion of iron particles of the reduced iron into a phase of a cementite (Fe₃C), which has a melting point of approximately 1,200°C or less. In addition, at least partially unreduced raw materials, that is, partially reduced iron or iron ore may be supplied to the melting part 600 from the reducing part 500. As described above, at least a portion of the unreduced raw material may have an oxygen component, and the oxygen component may react with the carbon component of the recarburizing agent within the melting space. Thus, in the reducing part 500, the exhaust gas containing the carbon monoxide gas, that is, the exhaust gas having a high carbon monoxide concentration (CO-rich) and a temperature of approximately 1,200°C or more may be discharged while melting the reduced iron. As described above, the exhaust gas discharged from the melting part 600 may be collected in the process (S400) of collecting the exhaust gas, and the collected exhaust gas may be used in the process (S500) of producing a hydrogen-containing gas, which will be described later.

The exhaust gas collected in the process (S400) of collecting the exhaust gas may be used not only in the process (S500) of producing the hydrogen-containing gas, but also in the process of preheating the above-described raw material. In other words, the process of preheating the raw material described above may use a portion of the exhaust gas collected in the process (S400) of collecting the exhaust gas. Since the exhaust gas has a high temperature of approximately 1,200°C or more, the thermal energy of the exhaust gas may be used to preheat the raw material.

To explain this in more detail, the process of preheating the raw material may include a process of directly injecting a portion of the exhaust gas discharged from the melting part 600 onto the raw material. In the process of supplying the raw material, the raw material stored in a storage space of a reservoir 110 may be supplied to the reducing part 500. Thus, a preheating gas supply part 120 may be installed in the reservoir 110 to supply a preheating gas to the storage space of the reservoir 110. Here, the process of preheating the raw material may be performed by injecting a high-temperature exhaust gas having a temperature of approximately 1,200°C or more from the preheating gas supply part 120 to the raw material stored in the storage space. In addition, the preheating gas supply part 120 may inject heated external air to the raw material stored in the storage space to preheat the raw material. Here, in the process of preheating the raw material, the preheating gas supply part 120 may heat the external air using heat of the exhaust gas having a temperature of approximately 1,200°C or more, and the heated air may be supplied to the storage space to preheat the raw material.

The process (S500) of producing the hydrogen-containing gas may produce the hydrogen-containing gas using the collected by-products and the exhaust gas.

Here, the process (S500) of producing the hydrogen-containing gas may include a process of allowing the collected by-products and the exhaust gas to directly react with each other. That is, in the process (S500) of producing the hydrogen-containing gas, the hydrogen-containing gas may be produced by allowing the by-products to react with the exhaust gas without separating a specific material from the by-products discharged from the reducing part 500. This process may be performed by the facility for manufacturing the molten iron in accordance with the foregoing exemplary embodiment. That is, the process of allowing the collected by-products to directly react with the exhaust gas may be performed reactors 730 and 740 that are connected to the exhaust gas supply line EL to receive the exhaust gas and connected to the by-product supply line BL to receive the by-products, and have a reaction space in which the exhaust gas and the by-products react with each other to generate the hydrogen-containing gas. Here, the reactors 730 and 740 may allow the by-products containing steam, hydrogen gas, and nitrogen gas to react with the exhaust gas containing the carbon monoxide gas, and the steam contained in the by-products and the carbon monoxide gas contained in the exhaust gas may be reformed into the hydrogen gas and the carbon dioxide gas by a water-gas conversion reaction to produce the hydrogen-containing gas including a hydrogen gas, a nitrogen gas, and a carbon dioxide gas.

In addition, the process (S500) of producing the hydrogen-containing gas may include a process of extracting a reaction object from the collected by-products and a process of allowing the extracted reaction object to react with the exhaust gas. That is, in the process (S500) of producing the hydrogen-containing gas, the reaction object may be extracted from the by-products discharged and collected from the reducing part 500 to react with the exhaust gas, thereby producing the hydrogen-containing gas. This process may be performed by the facility for manufacturing the molten iron in accordance with the foregoing another exemplary embodiment. That is, the process of extracting the reaction object may be performed by a purifier that is connected to a by-product supply line BL for collecting the by-products generated from the reducing furnace and extracts the reaction object from the by-products supplied through the by-product supply line BL, and the process of allowing the extracted reaction object to react with the exhaust gas may be performed the reactors 730 and 740 that are connected to an exhaust gas supply line EL and the purifier and has a reaction space in which the exhaust gas and the reaction material react with each other to generate the hydrogen-containing gas.

Here, the process of extracting the reaction object may include a process of separating the reaction object into a liquid state by injecting a processing liquid into the collected by-products and a process of heating and vaporizing the reaction object in the liquid state.

In the process of separating the reaction object into the liquid state, a separator 710 connected to the by-product supply line BL and capable of separating the reaction object in the liquid state from the by-products supplied through the by-product supply line BL may injects the processing liquid, that is, water, into the by-products, condense the steam in the by-products using the water, and mix the processing liquid with the water to separate the reaction object into the liquid state, that is, water. Here, in the process of separating the reaction object into the liquid state, a residual gas including the hydrogen gas and the nitrogen gas, excluding the steam and dust, may be discharged. Since the residual gas contains the hydrogen gas, a second extractor 820 connected to the separator 710 may collect the residual gas and extract the hydrogen gas from the residual gas by adsorbing and desorbing the hydrogen component from the collected residual gas.

The vaporization process may be performed by the heater 720 that receives the liquid reaction object, that is, water, from the separator 710 and heats the supplied water to vaporize the liquid reaction object into the steam. Here, the vaporization process may include a process of heating the liquid reaction object with the heat of the exhaust gas. As described above the vaporization process may be performed by a heat exchanger that is disposed to intersect the exhaust gas supply line EL and vaporizes the water into the steam by transferring the heat of the exhaust gas having a temperature of approximately 1,200°C or more to the water supplied from the separator 710.

As described above, a portion of the reaction object vaporized by the heat exchanger may be used as the purge gas. That is, a portion of the steam produced from the heat exchanger may be transferred to the reactor, and the other portion may be used as the purge gas supplied to the reducing space.

In the process of allowing the extracted reaction object to react with the exhaust gas, the exhaust gas supplied through the exhaust gas supply line EL2 via the heat exchanger and the vaporized reaction material, i.e., the steam supplied through the heat exchanger may react with each other to produce the hydrogen-containing gas. As described above, when only the steam that is the reaction object is extracted and supplied to the reactor to react with the exhaust gas, the reaction efficiency may be further improved.

In the process (S600) of extracting the hydrogen gas, the hydrogen gas may be extracted from the hydrogen-containing gas. When hydrogen-containing gas is produced by allowing the collected by-products to directly react with the exhaust gas, the process of extracting the hydrogen gas may be performed using a pressure swing adsorption method to extract the hydrogen gas. On the other hand, when the reaction object is extracted from the collected by-products, and the extracted reaction object reacts with the exhaust gas to produce the hydrogen-containing gas, the hydrogen component may be adsorbed, and the adsorbed hydrogen component may be desorbed to extract the hydrogen gas. Alternatively, the extracting part 800 may adsorb the carbon dioxide component and collect the hydrogen gas discharged without being adsorbed to extract the hydrogen gas.

The hydrogen gas extracted in the process (S600) of extracting the hydrogen gas may be used for various purposes. However, the reducing part 500 may use the hydrogen gas to reduce the raw material, that is, the iron ore, and the hydrogen gas may be used in a large amount more than twice the amount required to entirely reduce the raw material supplied to the reducing part 500, but is a very expensive gas, and thus, to reduce costs through resource recycling, the hydrogen gas extracted from the extracting part 800 may be reused as the reducing gas to reduce the iron ore. For this, the method for manufacturing the molten iron in accordance with an exemplary embodiment may be used to reduce the iron ore by supplying the extracted hydrogen gas as the reducing gas during the process (S100) of manufacturing the reduced iron.

As described above, in accordance with the exemplary embodiment, the hydrogen gas may be produced by reacting the by-products discharged during the manufacturing of the reduced iron with the exhaust gas discharged when the reduced iron is melted, thereby effectively recycling the by-products generated during the process.

In addition, the produced hydrogen gas may be recycled as the reducing gas for reducing the raw materials, the amount of hydrogen gas to be used may be reduced, and the resources and costs required for the process may be minimized.

In addition, the energy may be efficiently collected by using the sensible heat of the high-temperature exhaust gas to preheat the raw materials and produce the hydrogen gas.

Although the specific embodiments are described and illustrated by using specific terms, the terms are merely examples for clearly explaining the embodiments, and thus, it is obvious to those skilled in the art that the embodiments and technical terms can be carried out in other specific forms and changes without changing the technical idea or essential features. Therefore, it should be understood that simple modifications in accordance with the embodiments of the present invention may belong to the technical spirit of the present invention..

## Claims

1. A facility for manufacturing molten iron, the facility comprising:
a reducing part configured to manufacture reduced iron;
a melting part configured to receive and melt the reduced iron;
a reforming part installed to receive an exhaust gas discharged from the melting part and by-products discharged from the reducing part and configured to generate a hydrogen-containing gas using the exhaust gas and the by-products; and
an extracting part installed to receive a hydrogen-containing gas generated in the reforming part and configured to extract a hydrogen gas from the hydrogen-containing gas.

2. The facility of claim 1, further comprising:
a by-product supply line installed to connect the reducing part to the reforming part; and
an exhaust gas supply line installed to connect the melting part to the reforming part,
wherein the reducing part comprises a reducing furnace connected to the by-product supply line and having a reducing space in which reduced iron is manufactured using a reducing gas, and
the melting part comprises an electric furnace connected to the exhaust gas supply line and having a melting space in which the reduced iron is melted using electric heat.

3. The facility of claim 2, wherein the reforming part comprises a reactor connected to the exhaust gas supply line and the by-product supply line to receive the exhaust gas and the by-products and having a reaction space in which the exhaust gas and the by-products react with each other to generate a hydrogen-containing gas.

4. The facility of claim 2, wherein the reforming part comprises:
a purifier connected to the by-product supply line and configured to extract a reaction object from the by-products; and
a reactor connected to the exhaust gas supply line and the purifier to receive the exhaust gas and the reaction object and having a reaction space in which the exhaust gas and the reaction object react with each other to produce a hydrogen-containing gas.

5. The facility of claim 4, wherein the purifier comprises:
a separator connected to the by-product supply line and configured to separate the reaction object from the by-products into a liquid state; and
a heater connected to the separator, configured to heat and vaporize the reaction object in the liquid state, and connected the react so that the vaporized reaction object is supplied to the reactor.

6. The facility of claim 5, wherein the heater comprises a heat exchanger disposed to intersect the exhaust gas supply line and configured to transfer heat of the exhaust gas to the liquid reaction object.

7. The facility of claim 5, further comprising a purge gas supply line connected to the reducing furnace and configured to supply a purge gas to the reducing space,
wherein the heater is connected to the purge gas supply line to supply a vaporized reaction object to the purge gas supply line.

8. The facility of claim 5, wherein the extracting part comprises:
a first extractor connected to the reactor to extract a hydrogen gas from the hydrogen-containing gas generated from the reactor; and
a second extractor connected to the separator to extract a hydrogen gas from a residual gas discharged from the separator.

9. The facility of claim 2, further comprising:
a raw material supply part having a storage space in which a raw material is stored and installed to supply the raw material stored in the storage space to the reducing space; and
a branch line branched from the exhaust gas supply line and configured to supply a portion of the exhaust gas discharged from the electric furnace to the raw material supply part.

10. The facility of claim 9, wherein the branch line is connected to the raw material supply part to directly supply the exhaust gas to the storage space or transfer heat of the exhaust gas to air supplied to the storage space.

11. The facility of claim 2, further comprising a reducing gas supply line connected to the reducing furnace and configured to supply a reducing gas to the reducing space,
wherein the extracting part is connected to the reducing gas supply line to supply a hydrogen gas to the reducing gas supply line.

12. A method for manufacturing molten iron, the method comprising:
manufacturing reduced iron;
collecting by-products generated in the manufacturing of the reduced iron;
melting the reduced iron to manufacture a molten product;
collecting an exhaust gas discharged during the manufacturing of the molten product;
producing a hydrogen-containing gas using the collected by-products and the exhaust gas; and
extracting a hydrogen gas from the hydrogen-containing gas.

13. The method of claim 12, wherein the manufacturing of the reduced iron comprises:
preheating a raw material using the exhaust gas; and
allowing the preheated raw material to react with the reducing gas to reduce the raw material.

14. The method of claim 13, wherein the preheating of the raw material comprises injecting the exhaust gas into the raw material or receiving heat of the exhaust gas to inject heated air into the raw material.

15. The method of claim 13, wherein the raw material comprises powdered iron ore having a particle size of more than approximately 0 mm and less than or equal to approximately 8 mm.

16. The method of claim 12, wherein the producing of the hydrogen-containing gas comprises allowing the collected by-products to directly react with the exhaust gases.

17. The method of claim 12, wherein the producing of the hydrogen-containing gas comprises:
extracting a reaction object from the collected by-products; and
allowing the extracted reaction object to react with the exhaust gas.

18. The method of claim 17, wherein the extracting of the reaction object comprises:
injecting a processing liquid into the collected by-products to separate the reaction object into a liquid state; and
heating and vaporizing the reaction object in the liquid state.

19. The method of claim 18, wherein the vaporizing comprises heating the liquid reaction object with heat of the exhaust gas.

20. The method of claim 18, wherein the manufacturing of the molten iron comprises supplying a purge gas to a reducing space, in which the reduced iron is manufactured,
wherein the supplying of the purge gas comprises utilizing a portion of the vaporized reaction object as a purge gas supplied to the reducing space.

21. The method of claim 18, further comprising:
collecting a residual gas discharged during the separating of the reaction object into the liquid state; and
extracting a hydrogen gas from the residual gas.

22. The method of claim 12, further comprising supplying the extracted hydrogen gas during the manufacturing of the reduced iron.

23. The method of any one of claims 17 to 21, wherein the reaction object comprises steam, and
the exhaust gas comprises a carbon monoxide gas.
